# EUROPÄISCHE PATENTSCHRIFT

(11) **EP 1 925 199 B1**
(45) Veröffentlichungstag und Bekanntmachung des Hinweises auf die Patenterteilung: **20.01.2010**
(21) Anmeldenummer: 06024431.6
(22) Anmeldetag: 24.11.2006
(51) Int. Cl.: A01K 5/01, A01K 5/02

(54) **Mobile Abgabevorrichtung für Futterstücke, insbesondere für Trockenfutterstücke bzw. für Hundefutter**
Mobile dispensing device for food pellets, in particular for dried food pellets and for dog food
Dispositif de distribution mobile pour des fragments de fourrage, en particulier des fragments d'aliments secs, resp. des aliments pour chiens

(43) Veröffentlichungstag der Anmeldung: 28.05.2008
(73) Patentinhaber: De la Mora Sabido, Claudia, 92536 Pfreimd (DE)
(72) Erfinder: De la Mora Sabido, Claudia, 92536 Pfreimd (DE)
(74) Vertreter: Benninger, Johannes

(56) Entgegenhaltungen:
- US-A1- 2004 134 434
- US-A1- 2005 183 674
- US-A1- 2007 056 517
- US-B1- 6 220 479
- US-B1- 7 143 719

## Beschreibung

Die vorliegende Erfindung betrifft eine mobile Abgabevorrichtung für Futterstücke, insbesondere für Trockenfutterstücke bzw. für Hundefutter, mit den Merkmalen des unabhängigen Anspruchs 1.

Es ist bekannt, dass nahezu jeder Hund mit Hilfe von Belohnungen trainiert bzw. erzogen werden kann. Hundehalter haben deshalb normalerweise Belohnungen in Form von Trockenfutterstücken (sog. "Leckerlies") bei sich, um dem Hund jederzeit ein Stück geben zu können, wenn dies aus erzieherischen Gründen sinnvoll erscheint. Diese "Leckerlies" bzw. Trockenfutterstücke werden dem Hund bei positiven Verhaltensweisen einzeln verabreicht. Da diese Futterstücke im Allgemeinen aus tierischen Abfallprodukten hergestellt und daher entsprechend unhygienisch sind, verschmutzt sich der Hundebesitzer beim Verabreichen die Hände. Bei Spaziergängen besteht zudem im Allgemeinen keine Möglichkeit, die Hände jederzeit zu reinigen.

Ein weiteres Problem besteht darin, dass die Futterstücke umständlich in Taschen, Plastiktüten o. ä. aufbewahrt und transportiert werden. Dies ist einerseits umständlich und verschmutzt andererseits die Taschen mit Fett und anderen Verunreinigungen. Das Aufbewahren in der Kleidung, bspw. in den Hosentaschen, ist unhygienisch und verschmutzt die Kleidung. Oft dauert das Herausnehmen der Futterstücke zu lange, um den Hund im richtigen Moment der Erziehung zu belohnen. Wenn zwischen dem zu belohnenden Verhalten des Hundes und der Verabreichung des Futterstückes eine zu lange Zeit vergeht, droht der Erziehungseffekt verloren zu gehen, da der Hund nicht mehr weiß, warum er belohnt wird.

Eine häufige Lösung für manche der skizzierten Probleme stellt die Aufbewahrung der Futterstücke in geschlossenen Boxen dar, bspw. kleinen Kunststoffboxen mit verschließbarem Deckel oder kleinen Metallbüchsen, die jeweils nach ihrem Gebrauch ausgewaschen und neu befüllt werden können. Es bleibt hierbei jedoch weiterhin der Nachteil bestehen, dass das Herausnehmen der Futterstücke umständlich ist und für den gewünschten Erziehungseffekt oftmals zu lange Zeit in Anspruch nimmt.

Aus dem Stand der Technik sind Futtemäpfe und Futterausgabevorrichtungen, sog. Spender, in zahlreichen Varianten bekannt, so bspw. aus DE 296 17 137 U1, aus DE 20 2005 010 804 U1, aus DE 43 23 428 A1 und aus US 2005/0263082 A1. Bekannt sind weiterhin Spielgeräte, die den Einsatz von Trockenfutter erlauben, bspw. aus DE 298 21 473 U1 und aus DE 203 08 595 U1. Diese bekannten Vorrichtungen und Geräte beseitigen jedoch nicht die erwähnten Nachteile.

Die US 2005/0183674 A1 beschreibt eine Trainingsvorrichtung für Tiere in Form eines Futterspenders, der ein Magazin mit mehreren einzeln abgebbaren Futterstücken oder einem länglichen, mittels eines Messers in Portionen teilbaren Futterstück aufweist. Nach der Ausgabe der Futterstücke aus dem Magazin gelangen die Stücke auf eine schalenförmige Auflagefläche, von der aus die Futterstücke dem Tier verabreicht werden können.

Aus der US 2004/0134434 A1 ist weiterhin ein radförmiger Futterspender bekannt, bei dem ein Ausgaberad innerhalb eines Gehäuses in einzelne Segmente aufgeteilt ist, in denen sich jeweils ein Futterstück befinden kann. Durch Aktivierung einer Klick-Funktion durch Drücken eines zentralen Tasters an einer Flachseite des Gehäuses wird das Ausgaberad gedreht und gibt dadurch ein Futterstück an einer Ausgabeöffnung frei. Dieses Futterstück kann dem Tier durch Fallenlassen auf den Boden oder durch Übergabe verabreicht werden.

Die US-B1-6 220 479 offenbart schließlich eine Abgabevorrichtung zur vereinzelten Ausgabe von Konfektstücken mit einem Magazin und einem manuell betätigbaren Auslöseknopf, mit dessen Betätigung einzelne Stücke ausgegeben werden. Nach Freigabe des Auslöseknopfes wird aus dem Magazin ein weiteres Konfektstück in die Ausgabeposition gefördert, so dass in gleicher Weise mehrere Stücke nacheinander ausgegeben werden können.

Ein vorrangiges Ziel der Erfindung besteht demnach darin, eine mobile und leicht handhabbare Vorrichtung zur Verfügung zu stellen, mit der einem Hund Trockenfutter verabreicht werden kann. Vorzugsweise soll das Trockenfutter entnehmbar sein, ohne dass sich der Benutzer dabei die Hände verschmutzt.

Diese Ziele der Erfindung werden mit dem Gegenstand des unabhängigen Anspruchs erreicht. Eine erfindungsgemäße mobile Vorrichtung zur Abgabe von Futterstücken, insbesondere zur Abgabe von Trockenfutter bzw. von Hundefutter, umfasst ein Magazin zur Aufbewahrung mehrerer Futterstücke sowie eine damit gekoppelte Abgabeeinrichtung zur vereinzelten Abgabe von Futterstücken nach jeweiliger manueller Betätigung durch einen Benutzer.

Gemäß der Erfindung weist die Abgabeeinrichtung eine Einrichtung zum beschleunigten Auswurf einzelner Futterstücke auf. Insbesondere sind hierbei Trockenfutterstücke gemeint, die dem Hund zur Belohnung gereicht werden und die auch als "Leckerlies" bezeichnet werden. Der beschleunigte Auswurf von Leckerlies bildet eine Spielkomponente für den Hund, die eine Belohnung des Hundes nicht nur mit einem Futterstückchen, sondern zusätzlich mit der Herausforderung und Befriedigung des Spieltriebs des Hundes verbindet. Allein das Fangen eines ausgeworfenen Futterstückchens und damit das Reaktionsvermögen des Hundes kann auf diese Weise trainiert und jeweils sofort belohnt werden. Ist das Fangen ausgeworfener Futterstückchen antrainiert und bringt es dem Hund Freude, so kann es fortan als Belohnung für andere positive Verhaltensweisen eingesetzt werden.

Vorzugsweise, jedoch nicht zwingend vorgeschrieben, umfasst die Abgabeeinrichtung der vorliegenden Erfindung einen Energiespeicher, der mit einer Auswurfeinrichtung gekoppelt ist. Dieser ermöglicht einen beschleunigten Auswurf bzw. Ausstoß eines Futterstückchens. Der Energiespeicher der Abgabeeinrichtung kann bspw. wenigstens eine Spannfeder umfassen. Dies kann bspw. wenigstens eine Spiralfeder oder wenigstens eine Schenkelfeder sein. Der Energiespeicher bzw. die Spannfeder, Spiralfeder oder Schenkelfeder ist bevorzugt durch manuelle Betätigung durch den Benutzer aktivierbar bzw. spannbar.

Die Auswurfeinrichtung kann erfindungsgemäß bevorzugt manuell durch einen Benutzer in einen aktivierten Zustand versetzt werden. Hierzu kann am Gehäuse ein verschiebbarer bzw. verdrehbarer Spannhebel zur Aktivierung des Energiespeichers, bspw. zur Spannung der wenigstens einen Spannfeder, angeordnet sein.

Gleichzeitig mit dieser Aktivierung des Energiespeichers kann ein einzelnes Futterstückchen in eine Auswurfposition gebracht werden, bspw. kann ein einzelnes Futterstück aus dem Magazin in die Auswurfeinrichtung gefördert werden.

Hierzu gibt bspw. ein Schieber in seiner Endposition einen Schacht frei, durch welchen die Leckerlies von dem Magazin in eine Kammer bzw. einen Beschleunigungsschacht der Auswurfeinrichtung fallen können.

Die Einrichtung wird bspw. über einen mechanischen Rastmechanismus, welcher bspw. den verschiebbaren bzw. verdrehbaren Spannhebel in einer Endposition verrastet, in diesem aktivierten Zustand, mit energiegeladenem Energiespeicher und in Position befindlichem Leckerli, gehalten. Die erfindungsgemäße Einrichtung ist in diesem Zustand bereit, das Leckerli beschleunigt oder nicht beschleunigt auszugeben.

Für eine unbeschleunigte Abgabe kann der Benutzer bspw. die Vorrichtung einfach derart kippen, dass das Futterstück aufgrund der Schwerkraft aus der Abgabevorrichtung herausfällt.

Für eine beschleunigte Abgabe kann der Benutzer, vorzugsweise wiederum manuell, die Auswurfeinrichtung aktivieren. Die Aktivierung kann durch manuelle Betätigung bspw. eines am Gehäuse angeordneten Auslösehebels oder eines Auslöseknopfes erfolgen, welcher den Rastmechanismus löst und dadurch die Energie aus dem Energiespeicher freigesetzt, bspw. indem die Spannfeder entspannt wird. Nach dieser Aktivierung der Auswurfeinrichtung wird vorzugsweise nur ein einzelnes Futterstück aus der Abgabeeinrichtung geschleudert.

Die Auswurfeinrichtung kann hierzu einen Schieber, einen Beschleunigungsschlitten o. dgl. zur beschleunigten Förderung eines in der Kammer bzw. in dem Beschleunigungsschacht befindlichen Futterstücks aus einer Auswurföffnung der Auswurfeinrichtung aufweisen. Der Schieber bzw. Beschleunigungsschlitten ist hierzu mit dem Energiespeicher bzw. der Spannfeder und mit dem Auslöseknopf bzw. -hebel gekoppelt. Der Auslöseknopf bzw. -hebel löst den Rastmechanismus, der den Energiespeicher aktiviert bzw. die Spannfeder gespannt hält, und die freigesetzte Energie wird genutzt, um den Beschleunigungsschlitten bzw. den Schieber zu bewegen. Dieser beschleunigt das in Position gebrachte Leckerli und stößt es aus der Einrichtung. Der Auslöseknopf oder -hebel kann an beliebiger Stelle am Gehäuse angeordnet sein; gemäß einer bevorzugten Ausführungsform ist er zentral angeordnet.

Die Auswurfgeschwindigkeit, mit der das Futterstück die Auswurfeinrichtung verläßt, und somit auch die mögliche Wurfweite ist hierbei variabel, vorzugsweise, indem der Energiespeicher variabel einstellbar ist, bspw. durch eine variabel einstellbare Vorspannung der Spannfeder. Bspw. kann hierzu der Rastmechanismus zum Feststellen des verschiebbaren bzw. verdrehbaren Spannhebels in unterschiedlichen Positionen verrasten, die jeweils eine unterschiedliche Vorspannung der Spannfeder zur Folge haben. Alternativ kann die Lage der Spannfeder derart verändert werden, dass sie bei jeweils gleicher Lage des Rastmechanismus in unterschiedliche, von ihrer eigenen Lage abhängige Vorspannung gebracht ist.

Die Vorrichtung der vorliegenden Erfindung ist bevorzugt aus mehreren Bauteilen zusammengesetzt. Insbesondere umfasst die Vorrichtung wenigstens zwei Gehäuseteile.

Ein erster Gehäuseteil der Vorrichtung umfasst bevorzugt das Magazin, welches als Vorratsbehälter für Leckerlies dient. Dieser Gehäuseabschnitt ist vorzugsweise zu öffnen, so dass das Magazin vom Anwender wiederbefüllt werden kann.

Ein mit dem ersten Gehäuseteil gekoppelter zweiter Gehäuseteil umfasst die Abgabeeinrichtung. Dieser zweite Gehäuseabschnitt ist geschlossen und dient als mechanische Bodengruppe. Der erste Gehäuseteil ist auf den zweiten Gehäuseteil aufsetzbar und befestigbar, bspw. über eine Schnapp- oder Rastverbindung.

Das erste und das zweite Gehäuseteil sind vorzugsweise gegeneinander verdrehbar verbunden, so dass das Magazin drehbar auf der Abgabeeinrichtung aufsitzt.

Bspw. kann das erste Gehäuseteil ein Loch aufweisen, in welches ein Stift o. ä. des zweiten Gehäuseteiles mittels einer Schnappverbindung drehbar einsteckbar ist. Alternativ könnte das erste Gehäuseteil bspw. eine umlaufende Ringnut aufweisen, in welche ein ringförmiger Steg des zweiten Gehäuseteils einrastbar ist. Ringnut und Steg können auch klimatisch umgekehrt angeordnet sein. Weitere drehbare Verbindungen sind denkbar; die Erfindung ist in dieser Hinsicht nicht eingeschränkt.

Das Magazin weist vorzugsweise eine Mehrzahl von abgetrennten Gehäusesegmenten aus, die jeweils zur Aufnahme jeweils wenigstens eines Futterstückes dienen. Bevorzugt dienen die abgetrennten Gehäusesegmente jeweils zur Aufnahme genau eines Futterstückchens.

Der erste Gehäuseabschnitt kann nach unten hin offen sein, so dass er weitgehend eine Haubenform aufweist. Er ist derart auf den zweiten Gehäuseteil aufsetzbar, dass die Oberseite des zweiten Gehäuseteils die Öffnung des ersten Gehäuseteil verdeckt und diesen derart abschließt, dass in die Gehäusesegmente eingelegte Futterstücke nicht herausfallen können. Alternativ kann der erste Gehäuseabschnitt eine Bodenplatte aufweisen, welche mit einer Öffnung versehen ist, die vorzugsweise in Größe und Form mit der Größe und Form eines Gehäusesegmentes korrespondiert. Das Magazin mit den Gehäusesegmenten ist vorzugsweise drehbar auf diese Bodenplatte aufgesetzt. Ein derartiger erster Gehäuseteil ist über seine Bodenplatte auf dem zweiten Gehäuseteil aufgesetzt und bspw. verrastet. Die Öffnung in der Bodenplatte ist hierbei vorzugsweise über einer Kammer bzw. über dem Beschleunigungsschacht der Abgabe- bzw. Auswurfeinrichtung positioniert. Zur Sicherstellung einer derartigen Anordnung der beiden Gehäuseteile zueinander können bspw. Führungsstifte o. ä. zwischen den beiden Teilen angeordnet sein.

Die Drehung der beiden Gehäuseteile gegeneinander erfolgt bevorzugt stufenweise bzw. gerastert. Bei einer Verdrehung des ersten Gehäuseteils gegen den zweiten um eine Raststufe wird vorzugsweise jeweils ein Gehäusesegment des Magazins und damit ein in diesem Gehäusesegment befindliches Futterstückchen über einer Kammer bzw. über dem Beschleunigungsschacht der Auswurfeinrichtung positioniert. Gemäß einer Ausführungsform der Erfindung wird dieses Gehäusesegment des Magazins und damit ein in diesem Gehäusesegment befindliches Futterstückchen gleichzeitig auch über der Öffnung an der Unterseite des ersten Gehäuseteils positioniert. Das so positionierte Gehäusesegment des Magazins wird anschließend gegenüber der Auswurfeinrichtung freigegeben, bspw. indem ein Schieber, welcher bspw. mit dem Spannhebel gekoppelt ist, eine Öffnung an der Oberseite des zweiten Gehäuseteils oder einen Schacht freigibt, durch welchen das Futterstückchen hindurchfallen kann. Hierbei wird das Futterstück in die Kammer bzw. in den Beschleunigungsschacht der Auswurfeinrichtung gefördert.

Die Drehung des ersten Gehäuseteils bzw. Magazins erfolgt vorzugsweise manuell. Alternativ kann eine automatische Förderung vorgesehen sein. Bspw. kann ein Rasthaken vorgesehen sein, der während des Vorgangs der Spannung der Spannfeder in das erste Gehäuseteil eingreift und dieses während des Spannvorgangs um eine Stufe weiter dreht, so dass ein neues Gehäusesegment über der Kammer bzw. über dem Beschleunigungsschacht zu liegen kommt. Andere Mechanismen sind ebenfalls denkbar. Eine automatische Weiterförderung des Magazins vermeidet, dass die Drehung des Magazins vergessen wird, und aufgrund eines nicht in Position befindlichen Futterstückchens ein vermeintlicher Abschuss nicht erfolgt. Ein derartiger erfolgloser Abschuss hat einen unerwünschten Einfluss auf die Erziehung des Hundes und sollte daher vermieden werden.

Die Gehäuseteile sind vorzugsweise voneinander trennbar und jeweils separat reinigbar. Zumindest das erste Gehäuseteil der Vorrichtung, welches das Magazin aufweist, ist bevorzugt aus waschbarem und spülmaschinenfestem Material, insbesondere aus Kunststoff gebildet. Es ist vorzugsweise zumindest abschnittweise transparent, so dass jederzeit der Füllstand des Magazins geprüft werden kann. Eine Färbung in unterschiedlichen Farben ist ebenfalls möglich und den Kundenwünschen anzupassen. Das zweite Gehäuseteil, welches die Auswurfeinrichtung umfasst, kann hierbei bspw. in gleicher Farbe undurchsichtig ausgeführt sein.

Gemäß einer alternativen Ausführungsform der Erfindung kann der erste Gehäuseteil bzw. das daran angeordnete Magazin als Einwegteil ausgebildet sein, welches nach Leerung entfernt und durch eine neues Magazin ersetzt wird. Ein derartiges Einwegmagazin kann bspw. einen abziehbaren Folienverschluss aufweisen, der die darin befindlichen Leckerlies hygienisch verschließt und erst unmittelbar vor dem Aufsetzen auf den zweiten Gehäuseteil abgezogen wird. In dieser Ausführungsform ist ein Mitführen zusätzlicher Leckerlies besonders vereinfacht.

Weiterhin alternativ kann ein erstes Gehäuseteil, welches das Magazin aufweist, im Handel einzeln erhältlich sein, so dass mehrere, jeweils selbst befüllte und nachfüllbare Magazine mitgeführt werden können, wenn eine erhöhte Anzahl von Leckerlies benötigt wird. Die erfindungsgemäße Vorrichtung kann eine Halterung für ein Ersatzmagazin aufweisen, wodurch das Mitführen zusätzlicher Leckerlies besonders erleichtert ist.

Die erfindungsgemäße Vorrichtung zur Abgabe von Futterstücken ist vorzugsweise in Form und Größe handlich ausgeführt und somit jederzeit am Mann tragbar. Die Größe des Standardgerätes ist dem einfachen Gebrauch angepaßt, für verschiedene Einsatzzwecke kann die Größe jedoch variabel angepaßt sein. Bspw. kann ein Gerät, das gezielt bei der Hundedressur auf dem Dressurgelände eingesetzt wird, größer sein als ein Gerät, das ein Hundebesitzer bei seinem täglichen Spaziergang mit sich führt. Erstgenanntes kann auch eine Größe erreichen, die nicht mehr tragbar ist sondern vorzugsweise stationär zum Einsatz kommt.

Die erfindungsgemäße Vorrichtung kann mit einer Trageeinrichtung ausgestattet sein, bspw. mit einer Schnalle zur Befestigung der Vorrichtung an einem Gürtel oder am Hosensaum, einem Trageriemen oder einem Riemen zur Befestigung am Unterarm. Auch der Einsatz einer speziellen Tragetasche, die wiederum eine Trage- bzw. Halteeinrichtung aufweist, kann von Vorteil sein. Eine kleine Ausführungsform der Erfindung kann auch bspw. mit einem Karabinerhaken o. ä. ausgestattet sein, so dass sie an einer Gürtelschlaufe oder an einem Rucksackaußenriemen o. ä. befestigt werden kann.

Weiterhin kann die erfindungsgemäße Vorrichtung eine akustische Trainingshilfe oder ein akustisches Locksignal, bspw. einen integrierten Klicker zum Klickertraining, aufweisen. Ein derartiger Klicker kann bspw. unabhängig von dem Auslöseknopf an dem Gehäuse angeordnet sein, so dass der Auslösevorgang und das akustische Signal voneinander unabhängig sind. Vorzugsweise ist der Klicker in der Nähe des Auslöseknopfes oder diesem gegenüber liegend angeordnet, um eine einfache Handhabung zu bewerkstelligen. Alternativ kann der Klicker in den Auslöseknopf integriert sein, so dass jedes Auslösen mit einem akustischen Signal gekoppelt ist.

Kombinationen einer erfindungsgemäßen Vorrichtung mit weiteren Trainingshilfen sind ebenfalls denkbar.

### Ausführungsbeispiel

Die Erfindung wird nachfolgend anhand eines bevorzugten Ausführungsbeispiels unter Bezugnahme auf die beiliegenden Zeichnungen näher erläutert. Es zeigen:
Figur 1 eine schematische Draufsicht auf ein erstes Gehäuseteil einer erfindungsgemäßen Vorrichtung, welches das Magazin aufweist;
Figur 2 eine schematische Seitenansicht eines ersten Gehäuseteils einer erfindungsgemäßen Vorrichtung, welches das Magazin aufweist;
Figur 3 eine schematische Schnittdarstellung einer Draufsicht auf eine vollständige erfindungsgemäße Vorrichtung in entspannter Position;
Figur 4 eine schematische Schnittdarstellung einer Draufsicht auf eine vollständige erfindungsgemäße Vorrichtung im aktivierten Zustand;
Figur 5 eine schematische Schnittdarstellung der erfindungsgemäßen Vorrichtung aus Figur 4 in um 90° nach vorne gekippter Seitenansicht;
Figur 6 eine schematische Schnittdarstellung der erfindungsgemäßen Vorrichtung aus Figur 4 in um 90° zur Seite gekippter Seitenansicht;
Figur 7 eine schematische Draufsicht auf eine vollständige erfindungsgemäße Vorrichtung im aktivierten Zustand, bei der die Vorspannung der Spannfeder verändert ist.

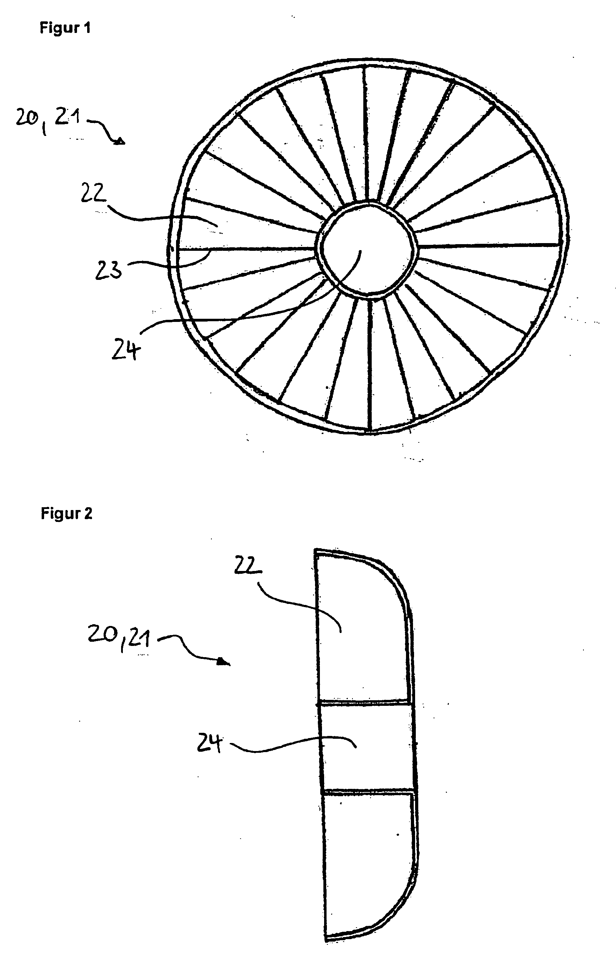

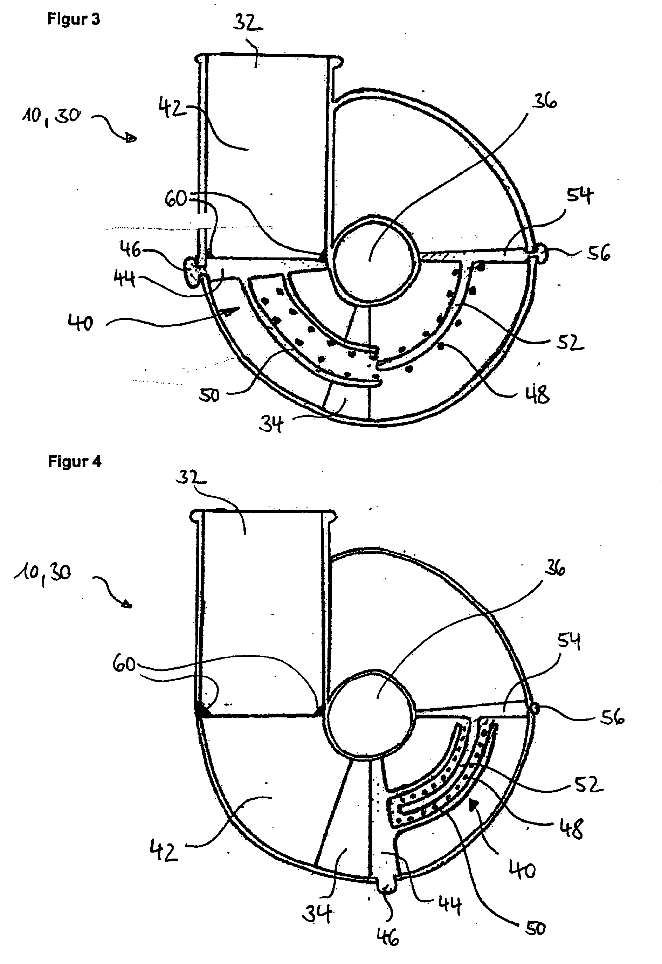

Figur 1 zeigt eine schematische Draufsicht auf ein erstes Gehäuseteil 20 einer erfindungsgemäßen Vorrichtung 10. Das erste Gehäuseteil 20 umfasst das Magazin 21, welches zur Aufbewahrung mehrerer Futterstücke (nicht dargestellt) dient. Hierzu weist das erste Gehäuseteil 20 mehrere jeweils abgeschlossene Gehäusesegmente 22 auf, die jeweils zur Aufnahme weniger oder bevorzugt genau eines Futterstückes dienen. In der dargestellten Ausführungsform der Erfindung ist das erste Gehäuseteil 20 haubenförmig ausgebildet; es weist keine Bodenplatte auf und ist nach unten hin bzw. zu der Seite hin, die im zusammengebauten Zustand dem zweiten Gehäuseteil 30 zugewandt ist (siehe Figuren 3 bis 7), offen. In dieser Haube verlaufen Scheidewände 23, welche die Gehäusesegmente 22 voneinander abtrennen. Weiterhin weist das erste Gehäuseteil 20 einen zentral angeordneten Abschnitt 24 zur drehbaren Befestigung an einem zweiten Gehäuseteil 30 auf. Der Befestigungsabschnitt 24 ist im dargestellten Fall ein Loch, in welches ein Stift o. ä. des zweiten Gehäuseteiles 30 mittels einer Schnappverbindung drehbar einsteckbar ist.

Die in Figur 2 gezeigte Seitenansicht des ersten Gehäuseteiles 20 verdeutlicht den Aufbau des wie beschrieben gestalteten Magazins 21 zur Aufbewahrung von Futterstückchen, insbesondere sind die haubenförmige Gestalt und das zentale Loch 24 zur drehbaren Befestigung des ersten Gehäuseteiles 20 an einer korrespondierenden Struktur des zweiten Gehäuseteiles 30 erkennbar.

Das Magazin 21 wie in Figuren 1 und 2 dargestellt ist vom Benutzer mit Futterstücken befüllbar und jederzeit nachfüllbar, da es vom zweiten Gehäuseteil 30 abnehmbar und dadurch zu öffnen ist. Es ist aus einem transparenten und spülmaschinenfesten Material, vorzugsweisen einem hochwertigen Kunststoff, hergestellt, so dass eine hygienische Aufbewahrung der Futterstücke ermöglicht ist und der Füllstand jederzeit überprüft werden kann.

Figur 3 verdeutlicht den Aufbau eines zweiten Gehäuseteils 30 einer erfindungsgemäßen Vorrichtung 10, welcher die Abgabeeinrichtung umfasst, die im gezeigten Beispiel eine Auswurfeinrichtung 40 aufweist. Die Auswurfeinrichtung 40 befindet sich in der Darstellung der Figur 3 in entspannter Position.

Die Abgabeeinrichtung 30 ist ein abgeschlossenes Gehäuseteil mit einem Befestigungsabschnitt 36 zur drehbaren Befestigung des ersten Gehäuseteils 20 bzw. Magazins 21. Der Befestigungsabschnitt 36 kann bspw. einen Zylinderabschnitt oder einen Stift o.ä. aufweisen, der in Größe und Form mit dem zentralen Loch 24 des ersten Gehäuseteiles 20 korrespondiert, so dass das erste Gehäuseteil 20 mit seinem Lochabschnitt 24 auf den Zylinder- oder Stiftabschnitt 36 des zweiten Gehäuseteiles 30 aufgesteckt werden kann. Zusätzlich können Rast-, Schnapp- oder andere Haltestrukturen vorhanden sein.

Die Abgabeeinrichtung 30 umfasst eine Kammer bzw. einen Ausgabeschacht 42, in dessen Bereich eine Öffnung 34 an der Oberseite des Gehäuseteils 30 angeordnet ist. Durch die Öffnung 34 hindurch kann jeweils der Inhalt eines darüber positionierten Gehäusesegmentes 22 des Magazins 21, bevorzugt genau ein Futterstück, in die Kammer bzw. den Ausgabeschacht 42 fallen, sofern die Öffnung 34 freigegeben ist. Die Kammer bzw. der Schacht 42 weist eine Auslassöffnung 32 auf, durch die hindurch ein in die Kammer bzw. den Schacht 42 gefördertes Futterstück nach außen abgegeben werden kann. In der gezeigten Ausführungsform der Erfindung kann diese Abgabe wahlweise beschleunigt oder nicht beschleunigt erfolgen.

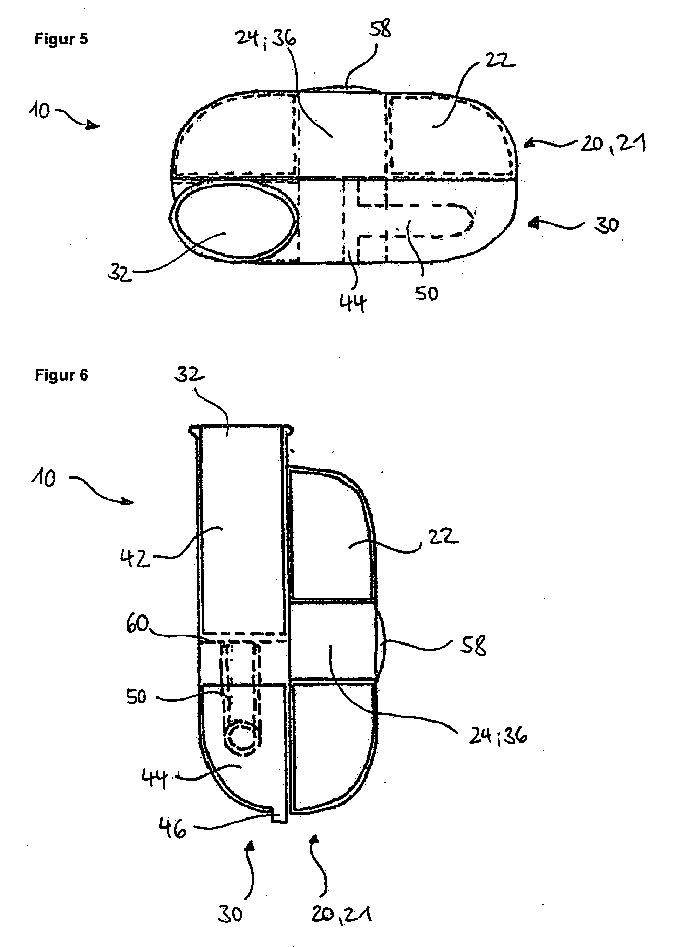

Befindet sich, wie in Figur 3 dargestellt, die Auswurfeinrichtung 40 in entspannter Position, so ist die Öffnung 34 versperrt. Im Ausführungsbeispiel umfasst die Auswurfeinrichtung 40: ein Stellelement 54 mit einem Führungsstift 52, auf den eine Spiralfeder 48 zumindest abschnittsweise aufgesteckt ist, die als Energiespeicher dient; einen Schieber 44, der eine Führungshülse 50 aufweist, welche die Spiralfeder 48 zumindest abschnittsweise umschließt; einen Spannhebel 46, mittels dessen der Schieber 44 manuell bewegbar ist, wodurch die Spiralfeder 48 zusammengedrückt und somit unter Spannung gesetzt wird; einen Rastmechanismus (nicht dargestellt), der den Schieber 44 in einer Position feststellt, in der die Spiralfeder 48 unter Spannung steht und gegen den Schieber 44 drückt (aktivierter Zustand der Figur 4); einen Auslöseknopf 58 (sichtbar in Figuren 5 und 6), der den Rastmechanismus löst und damit ein Entspannen der Spiralfeder 48 unter gleichzeitiger Bewegung des Schiebers 44 innerhalb und entlang des Ausgabeschachtes 42 auslöst; eine Anschlageinrichtung 60, die eine maximale Bewegung des Schiebers 44 vorgibt und die der Federspannung entgegenwirkt.

Im dargestellten Ausführungsbeispiel wird die Öffnung 34 durch die manuell über den Spannhebel 46 ausgeführte Bewegung des Schiebers 44 in seine Rastposition freigegeben, da bei dieser Bewegung die Komponenten der Auswurfeinrichtung 40, welche die Öffnung 34 verdecken, nämlich Spiralfeder 48, Führungshülse 50 und auch der Schieber 44 selbst, über die Öffnung 34 hinaus und neben diese geschoben werden. In der so erreichten aktivierten Position, die in Figur 4 dargestellt ist, kann ein Futterstück aus einem über der Öffnung 34 positionierten Gehäusesegment 22 des Magazins 21 in die darunterliegende Kammer bzw. den Ausgabeschacht 42 fallen. Durch Drehen des Magazins 21 kann ein neues, befülltes Gehäusesegment in die oberhalb der Öffnung 34 liegende Position gebracht werden. Die Drehbewegung des Magazins 21 erfolgt bevorzugt gerastert, so dass eine Drehung um eine Raststufe jeweils eine exakte Positionierung eines Gehäusesegmentes 22 über der Öffnung 34 zur Folge hat.

Ein auf die beschriebene Weise in den Ausgabeschacht 42 gefördertes Futterstück kann nun durch die Auslassöffnung 32 einfach nach außen gegeben werden, indem die gesamte Vorrichtung 10 derart gekippt wird, dass das Futterstück gemäß der Schwerkraft herausfällt. Alternativ kann der Auslöseknopf 58 betätigt werden, der eine schnelle Bewegung des Schiebers 44 zur Folge hat, welcher nun als Beschleunigungsschlitten dient und das Futterstück beschleunigt durch die Auslassöffnung 32 aus der Vorrichtung 10 heraus befördert.

Die Figuren 5 und 6 zeigen jeweils in schematischen Schnittdarstellungen aus unterschiedlichen Richtungen den Aufbau der erfindungsgemäßen Vorrichtung 10 in aktiviertem Zustand wie zu Figur 4 beschrieben. In Figur 6 ist zu erkennen, dass der Schieber bzw. Beschleunigungsschlitten 44 die gesamte Höhe des Ausgabeschachtes 42 einnimmt und somit auch kleine Futterstückchen oder zerfallene Futterstückchen nach außen befördern kann.

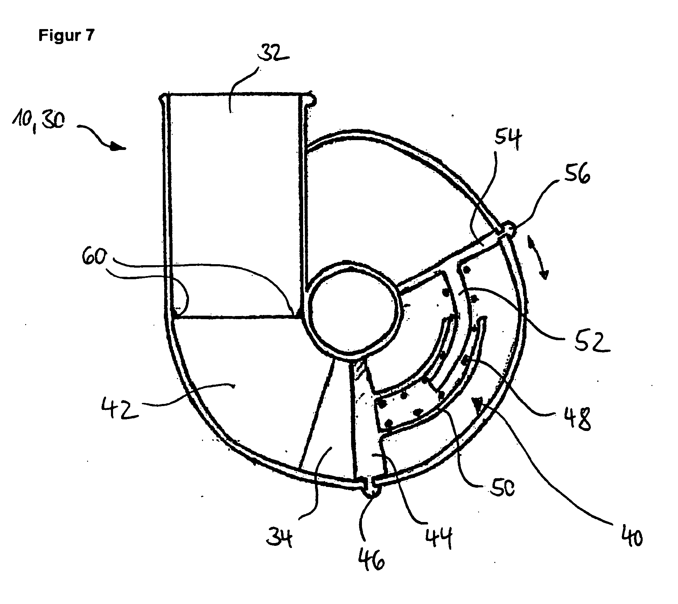

Figur 7 zeigt nochmals eine erfindungsgemäße Vorrichtung 10 in aktiviertem Zustand, wobei mittels des Stellelementes 54 eine geringere Vorspannung der Feder 48 eingestellt ist. Das Stellelement 54 kann mittels eines Rastmechanismus 56 gelöst, in Pfeilrichtung verschoben und in anderer Position wieder arretiert werden. Eine veränderte Federvorspannung hat eine veränderte Auswurfgeschwindigkeit und damit eine veränderte Wurfweite zur Folge.

Die dargestellte Vorrichtung 10 ist bezüglich Form, Größe und Gewicht so handlich beschaffen, dass sie jederzeit am Mann zu tragen ist. Sie ist somit auch zum Mitführen bei Spaziergängen geeignet. Hundebesitzer müssen Leckerlies nicht mehr unhygienisch und unpraktisch zu entnehmen in Tragetaschen oder gar Jacken- oder Hosentaschen mit sich führen, sondern haben eine hygienische Aufbewahrungsbox zur Verfügung, die in gleichem Maße ein einfaches Entnehmen einzelner Futterstücke ermöglicht sowie ein praktisches Spielgerät und eine hervorragende Erziehungshilfe darstellt.

Die Erfindung ist ausdrücklich nicht auf das voranstehende Ausführungsbeispiel beschränkt. Sowohl die Gestalt als auch der Spann- und Auswurfmechanismus der Vorrichtung können von der beschriebenen abweichend gestaltet sein. Insbesondere können andere Energiespeichermittel als die gezeigte Spiralfeder eingesetzt sein und die Gehäuseteile können in anderer als der gezeigten Weise drehbar miteinander verbunden sein. Die gezeigte Ausführungsform ist lediglich beispielhaft zu verstehen und schränkt die Erfindung nicht ein.

### Bezugszeichenliste

- 10: mobile Vorrichtung zur Abgabe von Futterstücken, insbesondere zur Abgabe von Trockenfutter bzw. Hundefutter
- 20: erster Gehäuseteil
- 21: Magazin
- 22: Gehäusesegmente
- 23: Scheidewände
- 24: Befestigungsabschnitt / Loch
- 30: zweiter Gehäuseteil / Abgabeeinrichtung
- 32: Auslassöffnung
- 34: Öffnung an der Oberseite
- 36: Befestigungsabschnitt
- 40: Auswurfeinrichtung
- 42: Ausgabeschacht / Kammer / Beschleunigungsschacht
- 44: Schieber / Beschleunigungsschlitten
- 46: Spannhebel
- 48: Spannfeder / Spiralfeder
- 50: Führungshülse
- 52: Führungsstift
- 54: Stellelement
- 56: Rastmechanismus
- 58: Auslöseknopf
- 60: Anschlag

## Patentansprüche

1. Mobile Vorrichtung zur Abgabe von Futterstücken (10), insbesondere zur Abgabe von Trockenfutter bzw. von Hundefutter, mit einem Magazin (21) zur Aufbewahrung mehrerer Futterstücke sowie einer damit gekoppelten Abgabeeinrichtung (30) zur vereinzelten Abgabe von Futterstücken nach jeweiliger manueller Betätigung durch einen Benutzer, wobei die Abgabeeinrichtung (30) einen Energiespeicher und eine damit gekoppelte Einrichtung (40) zum beschleunigten Auswurf einzelner Futterstücke aufweist, **dadurch gekennzeichnet, dass** der Energiespeicher durch manuelle Betätigung durch den Benutzer, insbesondere mittels eines an einem Gehäuse angeordneten verschiebbaren bzw. verdrehbaren Spannhebels (46), aktivierbar bzw. spannbar ist, und dass die Auswurfeinrichtung (40) durch manuelle Betätigung einer Auslöseeinrichtung, bspw. eines Auslöseknopfes (58) oder - hebels, unter gleichzeitiger Entspannung des Energiespeichers aktivierbar ist und hierdurch ein einzelnes Futterstück aus der Abgabeeinrichtung (30) geschleudert wird.

2. Vorrichtung nach Anspruch 1, **dadurch gekennzeichnet, dass** durch Aktivieren des Energiespeichers bzw. durch Spannen der Spannfeder (48) ein Futterstück aus dem Magazin (21) in die Abgabeeinrichtung (30) förderbar ist.

3. Vorrichtung nach Anspruch 1 oder 2, **dadurch gekennzeichnet, dass** das Magazin (21) ein erstes Gehäuseteil (20) der Vorrichtung (10) bildet und eine Mehrzahl von voneinander abgetrennten Gehäusesegmenten (22) zur Aufnahme jeweils wenigstens oder vorzugsweise genau eines Futterstückes aufweist, und bei der die Abgabeeinrichtung (30) in ein mit dem ersten Gehäuseteil (20) gekoppeltes zweites Gehäuseteil (30) integriert ist und bei der erstes und zweites Gehäuseteil (20, 30) gegeneinander verdrehbar und voneinander lösbar verbunden sind.

4. Vorrichtung nach einem der Ansprüche 1 bis 3, **dadurch gekennzeichnet, dass** der Energiespeicher wenigstens eine Spannfeder (48), insbesondere wenigstens eine Spiralfeder (48) oder wenigstens eine Schenkelfeder, ist.

5. Vorrichtung nach einem der Ansprüche 1 bis 4, **dadurch gekennzeichnet, dass** der Energiespeicher bzw. die Spannfeder (48) zur Variation der Auswurfgeschwindigkeit variabel einstellbar ist.

6. Vorrichtung nach einem der Ansprüche 3 bis 5, **dadurch gekennzeichnet, dass** bei einer Verdrehung des ersten Gehäuseteils (20) gegen den zweiten (30) um eine Raststufe jeweils ein Gehäusesegment (22) gegenüber der Auswurfeinrichtung (40) freigegeben wird, wobei ein Futterstück in eine Kammer (42) der Auswurfeinrichtung (40) gefördert wird.

7. Vorrichtung nach einem der Ansprüche 1 bis 6, **dadurch gekennzeichnet, dass** die Auswurfeinrichtung (40) einen Schieber (44) o. dgl. zur beschleunigten Förderung eines in der Kammer (42) befindlichen Futterstücks aus einer Auswurföffnung (32) aufweist und bei der der Schieber (44) mit dem Energiespeicher bzw. der Spannfeder (48) und mit dem Auslöseknopf (58) bzw. -hebel gekoppelt ist.

## Claims

1. A mobile device for dispensing pieces of food (10), in particular for dispensing dry food or dog food, having a magazine (21) for storing a plurality of pieces of food and a dispensing means (30) coupled thereto for dispensing individual pieces of food after particular manual actuation by a user, the dispensing means (30) comprising an energy storage means and means (40) coupled thereto for accelerated ejection of individual pieces of food, **characterised in that** the energy storage means may be activated or tensioned by manual actuation by the user, in particular by means of a displaceable or rotatable tensioning lever (46) arranged on a housing, and **in that** the ejection means (40) may be activated by manual actuation of a trigger means, for example a trigger button (58) or lever, with simultaneous release of the energy storage means, an individual piece of food thereby being ejected from the dispensing means (30).

2. The device according to claim 1, **characterised in that**, by activating the energy storage means or by tensioning the tension spring (48), a piece of food may be conveyed out of the magazine (21) into the dispensing means (30).

3. The device according to claim 1 or claim 2, **characterised in that** the magazine (21) forms a first housing part (20) of the device (10) and comprises a plurality of mutually separate housing segments (22) for accommodating in each case at least or preferably precisely one piece of food, and in which the dispensing means (30) is incorporated into a second housing part (30) coupled to the first housing part (20) and in which the first and second housing parts (20, 30) are connected together so as to be rotatable relative to one another and detachable from one another.

4. The device according to any one of claims 1 to 3, **characterised in that** the energy storage means is at least one tension spring (48), in particular at least one spiral spring (48) or at least one torsion spring.

5. The device according to any one of claims 1 to 4, **characterised in that** the energy storage means or the tension spring (48) may be variably adjusted to vary the ejection speed.

6. The device according to any one of claims 3 to 5, **characterised in that**, in the event of rotation of the first housing part (20) relative to the second (30) by one ratchet step, in each case one housing segment (22) is opened up opposite the ejection means (40), one piece of food being conveyed into a chamber (42) of the ejection means (40).

7. The device according to any one of claims 1 to 6, **characterised in that** the ejection means (40) comprises a slide (44) or the like for accelerated conveyance of a piece of food located in the chamber (42) out of an ejection opening (32) and in which the slide (44) is coupled with the energy storage means or the tension spring (48) and with the trigger button (58) or trigger lever.

## Revendications

1. Dispositif mobile pour la distribution de morceaux de nourriture pour animaux (10), en particulier pour la distribution de nourriture sèche ou de nourriture pour chiens, avec un magazine (21) destiné à la conservation de plusieurs morceaux de nourriture pour animaux, ainsi qu'un équipement de distribution (30) couplé à ce dernier pour la distribution individuelle de morceaux de nourriture pour animaux chaque fois après l'actionnement manuel par un utilisateur, étant donné que l'équipement de distribution (30) présente un accumulateur d'énergie et un équipement (40) pour le transport accéléré de morceaux de nourriture individuels pour animaux couplé à ce dernier, **caractérisé en ce que** l'accumulateur d'énergie peut être activé ou tendu par actionnement manuel par l'utilisateur, en particulier au moyen d'un levier de tension (46) mobile ou pivotant disposé sur un boîtier, et **en ce que** l'équipement éjecteur (40) peut être activé par actionnement manuel d'un équipement de déclenchement, par exemple un bouton de déclenchement (58) ou levier de déclenchement, avec détente simultanée de l'accumulateur d'énergie, et par ce biais un morceau de nourriture pour animaux individuel est éjecté de l'équipement de distribution (30).

2. Dispositif selon la revendication 1, **caractérisé en ce qu'**un morceau de nourriture pour animaux peut être transporté du magazine (21) dans l'équipement de distribution (30) par activation de l'accumulateur d'énergie ou tension du ressort de tension (48).

3. Dispositif selon la revendication 1 ou 2, **caractérisé en ce que** le magazine (21) forme une première partie de boîtier (20) du dispositif (10) et présente un pluralité de segments de boîtier (22) séparés l'un de l'autre pour la réception chacun d'au moins ou, de préférence, d'exactement un morceau de nourriture pour animaux, et pour lequel l'équipement de distribution (30) est intégré dans une deuxième partie de boîtier (30) couplée à la première partie de boîtier (20), et pour lequel la première et la deuxième partie de boîtier (20, 30) sont pivotants l'un contre l'autre et sont reliés de manière détachable l'un de l'autre.

4. Dispositif selon l'une quelconque des revendications 1 à 3, **caractérisé en ce que** l'accumulateur d'énergie est au moins un ressort de tension (48), en particulier au moins un ressort en spirale (48) ou au moins un ressort à branches.

5. Dispositif selon l'une quelconque des revendications 1 à 4, **caractérisé en ce que** l'accumulateur d'énergie ou le ressort de tension (48) peut être réglé de manière variable pour la variation de la vitesse d'éjection.

6. Dispositif selon l'une quelconque des revendications 3 à 5, **caractérisé en ce que**, chaque fois qu'on fait pivoter la première partie de boîtier (20) contre la deuxième (30) d'un cran, un segment de boîtier (22) est libéré en face de l'équipement éjecteur (40), un morceau de nourriture pour animaux étant transporté dans une chambre (42) de l'équipement éjecteur (40).

7. Dispositif selon l'une quelconque des revendications 1 à 6, **caractérisé en ce que** l'équipement éjecteur (40) présente un coulisseau (44) ou autre semblable pour le transport accéléré d'un morceau de nourriture pour animaux se trouvant dans la chambre (42) à travers un orifice d'éjection (32), et pour lequel le coulisseau (44) est couplé à l'accumulateur d'énergie ou au ressort de tension (48) et au bouton de déclenchement (58) ou levier de déclenchement.
